(19) Europäisches Patentamt
European Patent Office
Office européen des brevets

(11) EP 1 972 643 B1

(12) # EUROPEAN PATENT SPECIFICATION

(45) Date of publication and mention of the grant of the patent:
**12.02.2014 Bulletin 2014/07**

(21) Application number: **06843707.8**

(22) Date of filing: **26.12.2006**

(51) Int Cl.:
***C08F 30/02*** *(2006.01)* ***C07F 9/113*** *(2006.01)*
***C08F 2/40*** *(2006.01)*

(86) International application number:
**PCT/JP2006/326334**

(87) International publication number:
**WO 2007/080812 (19.07.2007 Gazette 2007/29)**

(54) **PROCESS FOR PRODUCTION OF PHOSPHATE POLYMER**

VERFAHREN ZUR HERSTELLUNG VON PHOSPHATPOLYMER

PROCEDE DE PRODUCTION DE POLYMERE DE PHOSPHATE

(84) Designated Contracting States:
**DE ES FR GB IT**

(30) Priority: **13.01.2006 JP 2006005854**

(43) Date of publication of application:
**24.09.2008 Bulletin 2008/39**

(73) Proprietor: **Kao Corporation**
**Chuo-ku**
**Tokyo 103-8210 (JP)**

(72) Inventor: **KUBO, Makoto**
**Wakayama-shi, Wakayama 640-8580 (JP)**

(74) Representative: **HOFFMANN EITLE**
**Patent- und Rechtsanwälte**
**Arabellastrasse 4**
**81925 München (DE)**

(56) References cited:
**EP-A1- 1 967 521**
**JP-A- 04 253 987**
**JP-A- 11 061 032**
**JP-A- 2000 007 687**
**JP-A- 2003 146 992**
**JP-A- 2006 052 381**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Field of the invention

The present invention relates to a method of producing a phosphate polymer and also to a phosphate polymer obtained by the production method.

Background of the invention

Phosphates such as monophosphates and diphosphates are used in various fields such as surfactants, metal binder materials and antistatic agents for fibers. These phosphates are industrially produced by a condensation reaction between phosphoric acid anhydrides such as phosphorous pentoxide, phosphoric acid or polyphosphorous and organic hydroxy compounds in general. By this reaction, a monophosphate, diphosphate, triphosphate, pyrophosphate and the like are produced, wherein the ratio of these esters differs depending on the ratio of phosphoric acid anhydrides such as phosphorous pentoxide, phosphoric acid or polyphosphoric acid and organic hydroxy compounds to be charged. Also, among phosphates, polymerizable phosphates having, for example, a methacryloyl group and the like are superior in polymerization characteristics and are therefore conventionally used for fiber treating agents, paints, dental materials and the like (JP-A 11-80175).

Also, JP-A 2006-052381 discloses a phosphate polymer which is obtained by copolymerizing a specific monomer 1 having a polyoxyalkylene group, a monophosphate type monomer 2 and a diphosphate type monomer 3 under a controlled pH of 7 or less and is preferable as a hydraulic composition dispersant. Also, JP-A 2003-146992 discloses a method of producing a phosphate polymer using a specified phosphating agent.

Summary of the invention

The present invention relates to a method of producing a phosphate polymer, including the following steps (I) and (II):

step (I) : a step including adding a phosphating agent (2) and a polymerization inhibitor to a reaction system containing an organic hydroxy compound (1) represented by the following formula (1) to react the organic hydroxy compound (1) with the phosphating agent (2) and produce a polymerizable phosphate, wherein the organic hydroxy compound (1) and the phosphating agent (2) are used in such a condition that the value of the following equation (I) is 2.0 to 4.0 and the reaction system is kept at a temperature of from 40°C to 75°C from starting of the addition of the phosphating agent (2) until finishing of the addition of the phosphating agent (2):

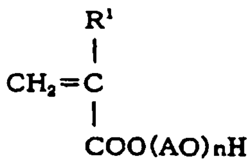

(1)

wherein, $R^1$ represents a hydrogen atom or a hydrocarbon group having 1 to 10 carbon atoms, A represents an alkylene group having 2 to 12 carbon atoms and n denotes a number of from 0.1 to 20 on the average;

$$\frac{\left\{\text{the mole number of water containing } n(H_2O)\text{, included in the phosphating agent represented by } P_2O_5\cdot n(H_2O)\right\} + \left\{\text{the mole number of an organic hydroxy compound}\right\}}{(\text{the mole number of the phosphating agent based on } P_2O_5)} \quad (I)$$

step (II): heating the polymerizable phosphate composition which is obtained in the step (I) and contains the polymerizable phosphate and the polymerization inhibitor to 40°C to 100°C and adding the heated composition to a reaction system to polymerize the polymerizable phosphate or copolymerize the polymerizable phosphate with a monomer copolymerizable with the polymerizable phosphate and thereby produce a phosphate polymer, wherein the (co) polymerization is performed in the presence of a chain transfer agent and by solution polymerization in an aqueous type solvent.

Also, the present invention relates to a phosphate polymer composition containing the phosphate polymer obtained in the above production method of the present invention and to a method of producing a concrete dispersant including the phosphate polymer composition.

Detailed description of the invention

JP-A 2003-146992 relates to technologies used to obtain a polymer cured by ultraviolet rays or the like, and polymers obtained in a liquid state such as an aqueous solution are not the subjects of these technologies.

The present invention provides a process for producing a phosphate polymer, having high qualities, for example, a good smell and hue, in an industrial scale safely and easily to obtain a phosphate polymer being suitable for a composition containing a hydraulic powder, especially as material for a dispersant of concrete.

Also, there is the case where the polymerizable phosphate undergoes ester rearrangement with time or by heating during storing and varies in its composition (percentage composition of a monoester body, diester body and triester body). Because the polymerizable phosphate is a reactive monomer, it is preferable that the phosphate polymer be stored in a cooled dark place or in a room to thereby limit a variation in composition and to restrict polymerization.

The present invention is also to provide a method of producing a phosphate polymer, the method stabilizing the composition of a phosphate polymer, at the same time, improving handling characteristics and production yield when the polymer is produced, and suppressing a variation in the performance of the polymer, thereby for example, making possible to develop the dispersion performance highly and stably.

The present invention provides a process for producing a phosphate polymer, having high qualities, for example, a good smell and a good hue, in an industrial scale safely and easily to obtain a phosphate polymer being suitable for a composition containing a hydraulic powder, especially as material for a dispersant of concrete, which can exhibit a high dispersibility stably.

The phosphate polymer is preferable as, for example, raw materials of dispersants such as inorganic powders.

Also, according to the present invention, a method of producing a phosphate polymer is provided so that stability of the composition of the phosphate polymer is improved, and at the same time, handling characteristics and production yield are improved, and a phosphate polymer which can exhibit a high dispersibility of the polymer stably can be obtained.

<Step (I)>

The step (I) of the present invention is a step in which a phosphating agent (2) and a polymerization inhibitor are added to a reaction system containing an organic hydroxy compound (1) represented by the following formula (1) to react the organic hydroxy compound (1) with the phosphating agent (2) to produce a polymerizable phosphate, wherein the organic hydroxy compound (1) and the phosphating agent (2) are used in such a condition that the value given by the following formula (I) is 2.0 to 4.0 and the reaction system is kept at a temperature from 40°C to 75°C from starting of the addition of the phosphating agent (2) until finishing of the addition of the phosphating agent (2):

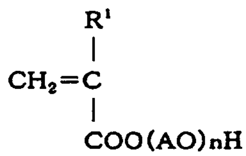

(1)

In the formula, $R^1$ represents a hydrogen atom or a hydrocarbon group having 1 to 10 carbon atoms, A represents an alkylene group having 2 to 12 carbon atoms and n denotes a number from 0.1 to 20 on the average.

$$\frac{\left\{\begin{array}{l}\text{the mole number of water}\\ \text{containing } n(H_2O)\text{, included in}\\ \text{the phosphating agent}\\ \text{represented by } P_2O_5\cdot n(H_2O)\end{array}\right\} + \left\{\begin{array}{l}\text{the mole number of an organic}\\ \text{hydroxy compound}\end{array}\right\}}{(\text{the mole number of the phosphating agent based on } P_2O_5)} \quad (I)$$

In the formula (I) used in the present invention, the phosphating agent (2) is represented by $P_2O_5 \cdot n(H_2O)$ for the sake of convenience.

Also, the mole number of the phosphating agent defined in the formula (I) shows the amount (moles) of $P_2O_5$ unit derived from the phosphating agent (2) introduced into the reaction system as the raw material.

Also, the mole number of water shows the amount (moles) of water ($H_2O$) derived from the phosphating agent introduced into the reaction system as the raw material. In other words, the above water includes all water existing in the reaction system when polyphosphoric acid is represented as ($P_2O_5 \cdot xH_2O$) and orthophosphoric acid is represented as (1/2 ($P_2O_5 \cdot 3H_2O$)). In the organic hydroxy compound (1) represented by the formula (1) and used in the present invention, $R^1$ represents a hydrogen atom or a hydrocarbon group having 1 to 10 carbon atoms, preferably a hydrogen atom or an alkyl group having 1 to 5 carbon atoms, more preferably a hydrogen atom or a methyl group and even more preferably a methyl group. A represents an alkylene group (including a polymethylene group such as a trimethylene group) having 2 to 12 carbon atoms and preferably an alkylene group having 2 to 3 carbon atoms. n denotes an average added mole number of alkylene oxide, a number of 0.1 to 20, preferably 0.5 to 15, more preferably 1 to 10 and even more preferably 1 to 5 on the average. The organic hydroxy compound (1) is preferably alkylene oxide adducts of methacrylic acid or acrylic acid (the alkylene oxide has 2 to 12 carbon atoms and the average added mole number of alkylene oxides is 0.1 to 20).

The phosphating agent (2) used in the present invention is preferably at least one selected from phosphorous pentoxide, phosphoric acid and polyphosphoric acid. Examples of the phosphoric acid include orthophosphoric acid and commercially available aqueous solution types such as an aqueous 75% phosphoric acid solution. Also, examples of the polyphosphoric acid include condensates of orthophosphoric acid (for example, those which are condensates of orthophosphoric acid and commercially available as 116% strong phosphoric acid). These compounds may be used either singly or in combinations of two or more. In these combinations, the amounts of the compounds to be combined may be optionally changed to the extent that the above formula (I) is fulfilled. Specifically, a combination of orthophosphoric acid and phosphorous pentoxide (phosphoric acid anhydride) or a combination of orthophosphoric acid, polyphosphoric acid and phosphorous pentoxide (phosphoric acid anhydride) is preferable and a combination of orthophosphoric acid and phosphorous pentoxide (phosphoric acid anhydride) is particularly preferable.

The content of water in the above phosphorous pentoxide is preferably 5% by weight or less to prevent phosphorous pentoxide from being left unsolved. Other phosphating agents such as phosphorous oxychloride may be used. Here, the above JP-A 2003-146992 describes that phosphorous pentoxide and water are used when 2-hydroxyethylacrylate is phosphorylated. However, in the case where, like the present invention, the organic hydroxy compound (1) has an ester bond, the amount of water to be added in the system is preferably small. This is because the reduction in the amount of water in the system can sufficiently prevent the occurrence of the phenomenon that while water reacts with phosphorous pentoxide and reacts with the organic hydroxy compound (1) via a polyphosphoric acid, the temperature in the system is raised by heat generation so that ester bonds of the organic hydroxy compound (1) is hydrolyzed by water left in the reaction system. In order to limit the hydrolysis of ester bonds of the hydroxy compound (1), it is necessary that the reaction system be kept at lower temperatures and therefore, the suspension of phosphoric acid anhydride (phosphorous pentoxide) is added dropwise in the system at 0 to 30°C in the examples and comparative examples of JP-A 2003-146992. However, the condition of higher temperature is advantageous in view of the load on equipment and in view of costs to produce the polymer in an industrial scale. In the present invention, a phosphating agent which can be used in the form of an aqueous solution, and specifically, an aqueous 75% phosphoric acid solution, as described below, for example, in Examples, is used, and phosphorous pentoxide and a phosphating agent which can be used in the form of an aqueous solution are combined, whereby the phosphating agent can be supplied in an effective amount while the amount of water to be used is reduced as a whole. Also, the hydrolysis of ester bonds is limited even at 50°C to 100°C and particularly 70°C to 100°C, which are temperatures relatively higher when phosphorous pentoxide is poured into the system. Therefore, the above combinations of the phosphating agents are preferable.

In the present invention, the organic hydroxy compound (1) and the phosphating agent (2) are in such an amount that the value given by the above formula (I) is 2.0 to 4.0. When this ratio is in this range, the phosphating agent (2) is contained in an appropriate amount and therefore, a polymerizable monophosphate can be obtained efficiently.

The present invention is provided with a step of adding the phosphating agent (2) in the reaction system containing the organic hydroxy compound (1). As to the temperature of the reaction system when adding the phosphating agent (2), and particularly, phosphorous pentoxide to the reaction system, the phosphating agent (2) is added at a temperature of necessarily 40 to 75°C from the start to end of the addition from the viewpoint of improvements in reaction rate and the yield of ester bodies and the smell of the polymer obtained using a polymerizable phosphate compound.

The time (time taken from the start to end of the addition) required to add the phosphating agent (2), and particularly, phosphorous pentoxide to the reaction system including the organic hydroxy compound (1) is preferably less than 20 hours, more preferably 0.1 hours to 20 hours, even more preferably 0.5 hours to 10 hours and even more preferably 1 hour to 6 hours. It is also preferable to add the total amount of the phosphating agent (2) to the reaction system either successively or intermittently and radually.

In the step of adding the phosphating agent and, particularly, phosphorous pentoxide, it is important to reduce coloration and to suppress the polymerization of the organic hydroxy compound (1). In order to attain this, it is preferable to run the reaction under stirring with a stirring power of 1. 5 $kw/m^3$ or more. As the stirring blade achieving such a stirring power, a Houdrer blade, paddle blade, turbine blade, propeller blade and anchor blade are preferable. These blades may be used in combinations of two or more. Also, in order to improve stirring shearing force, it is preferable to install a baffle plate in the reaction vessel.

Though there is no limitation to the temperature after the phosphating agent (2) is added, the reaction is preferably run at 0°C to 100°C. In other words, the temperature of the reaction system is kept at a temperature ranging from preferably 0°C to 100°C, more preferably 20°C to 90°C, even more preferably 30°C to 85°C and even more preferably 60 to 85°C since the addition of the phosphating agent (2) to the reaction system is started until the reaction between the organic hydroxy compound (1) and the phosphating agent (2) is finished. Also, the reaction time is preferably 0.1 to 20 hours, more preferably 0.5 to 10 hours and even more preferably 1 to 5 hours.

After the phosphating reaction is finished, produced condensates of phosphoric acid (organic compounds having pyrophosphoric acid bonds and phosphoric acid) may be reduced by hydrolysis.

In the present invention, a polymerization inhibitor is added in the reaction to limit polymerization during reaction or storage and to stabilize the composition. A further polymerization inhibitor is preferably added, after the reaction is finished, for storage.

Though there is no particular limitation to the polymerization inhibitor, for example, one or more polymerization inhibitors selected from the group having quinone aromatic compounds and nitrosamine type compounds. More specifically, one or more types selected from hydroquinone monomethyl ether, hydroquinone, 4-methoxy-1-naphthol, β-benzoquinone, methyl-p-benzoquinone, tert-butylbenzoquinone, 2,5-diphenyl-p-benzoquinone, 2,5-tert-butyl-hydroquinone, methylhydroquinone, 2,5-bis(1,1-dimethylbutyl)hydroquinone, tert-butyl-hydroquinone, p-benzoquinone, N-nitrosophenylhydroxylamine, N-nitrosophenylhydroxylamine-aluminum salt, 2,5-bis(1,1,3,3-tetramethylbutyl)hydroquinone and phenothiazine are preferable. A quinone aromatic type compound is preferable, one or more types selected from hydroquinone monomethyl ether, hydroquinone and methylhydroquinone are more preferable and hydroquinone monomethyl ether is even more preferable. The amount of these polymerization inhibitors to be added is preferably 0.0001 to 5% by weight, more preferably 0.0005 to 3% by weight, even more preferably 0.01 to 2% by weight, even more preferably 0.03 to 1% by weight and even more preferably 0.05 to 0.5% by weight based on the total charge amount.

In the present invention, no particular limitation is imposed on the content of the organic hydroxy compound (1) left unreacted in the reaction system after the reaction is finished. However, the residual amount of the organic hydroxy compound (1) is preferably small from the viewpoint of an improvement in the purity of the intended product.

The polymerizable phosphate obtained in the step (I) in the present invention generally has a mixture of a monoester body and a diester body and may be used as the polymerizable phosphate composition. The composition is useful as the raw material of fiber-treating agents, paints dental materials or the like, and also, as the raw materials for dispersants used for hydraulic powders and is preferable particularly as the raw material for concrete dispersants developing high water-reducing ability.

<Step (II)>

In the step (II) in the present invention, the polymerizable phosphate composition which is obtained in the step (I) and contains the polymerizable phosphate and the polymerization inhibitor is heated to 40 to 100°C and added to the reaction system to polymerize the polymerizable phosphates or polymerize the polymerizable phosphate with a monomer copolymerizable with the polymerizable phosphate, thereby producing a phosphate polymer.

As mentioned above, the polymerizable phosphate composition contains the polymerizable phosphate having an unsaturated bond in the molecule, obtained in the step (I), and the polymerization inhibitor. Also, the polymerizable

phosphate composition may contain a monomer copolymerizable with the polymerizable phosphate and other components. Here, as the polymerization inhibitor used in the step (II), those given in the step (I) may be used. In this case, though the types of polymerization inhibitors used in the steps (I) and (II) may be different from each other, it is more preferable to use the same type.

Generally, a part or all of the polymerization inhibitor added in the step (I) is consumed in the step (I) and therefore, it is preferable to confirm the residual amount of the polymerization inhibitor in the polymerizable phosphate composition prior to the step (II). It is preferable that thereafter, the polymerization inhibitor is added to the reaction product obtained in the step (I) such that the amount of the polymerization inhibitor contained in the reaction system falls in the above range to prepare the polymerizable phosphate composition which is to be used in the step (II) and contains the polymerizable phosphate and a specified amount of the polymerization inhibitor. The addition step makes up the consumed polymerization inhibitor as will be mentioned later.

Then, the polymerization phosphate composition obtained in this manner is shifted to the next polymerization reaction wherein it is used in the condition that it is heated to 40°C to 100°C. This method is preferable from the viewpoint of the dispersibility of the polymer.

In conventional methods, the polymerizable monomer is preferably cooled positively to limit polymerization when the polymerizable monomer is stored before it is reacted. However, the monomer is heated from a low-temperature state where the cooled monomer is highly viscous, bringing about impaired working efficiency. In the present invention, on the contrary, the polymerizable monomer can be kept in a low viscosity and highly fluid state for a longer time prior to the reaction and therefore, a deterioration in the qualities of the polymer is not caused even if the monomer is subjected to the reaction just as it stands. The polymerizable phosphate composition used in the step (II) preferably contains the polymerization inhibitor in an amount of 0.0001 to 10% by weight. In particular, if the polymerization inhibitor is formulated in an amount as much as, for example, 0.01 to 10% by weight, preferably 0.03 to 5% by weight, more preferably 0.05 to 3% by weight and even more preferably 0.1 to 2% by weight, a more excellent quality retaining effect is obtained.

The heating temperature of the polymerizable monomer is 40°C to 100°C, preferably 40°C to 90°C, more preferably 40°C to 80°C, even more preferably 40°C to 70°C and even more preferably 40°C to 60°C. The heating of the reaction system is started before the monomer is introduced and this temperature is kept until the introduction of the monomer into the reaction system is completed.

Also, the time (predetermined time) required to add the polymerizable phosphate composition heated to 40°C to 100°C to the reaction system is preferably 0.1 to 48 hours, more preferably 0.5 to 35 hours, even more preferably 1 to 30 hours and even more preferably 1 to 24 hours.

The viscosity of the polymerizable phosphate composition heated to 40°C to 100°C is preferably 1000 mPa·S or less and more preferably 500 mPa·S or less from the viewpoint of workability, an improvement in yield and the stability of the composition in the step (II). In this case, the measurement of viscosity is made according to Japanese Industrial Standard K6833.

In the step (II), the polymerization is carried out after the polymerizable phosphate composition containing the polymerizable phosphate and the polymerization inhibitor obtained in the step (I) is treated at 40°C to 100°C. The treating temperature is preferably 40°C to 90°C, more preferably 40°C to 80°C, even more preferably 40°C to 70°C and even more preferably 40°C to 60°C. Generally, it is only required to allow the polymerizable phosphate composition to stand in such a temperature environment. The treating time is preferably 0.1 to 48 hours, more preferably 0.5 to 35 hours, even more preferably 1 to 30 hours and even more preferably 1 to 24 hours. When such a treatment is performed, the treated composition may be used as the polymerizable phosphate composition put in a heated state while keeping that temperature and may be added to the reaction system in the step (II).

In the present invention, besides homopolymers of the polymerizable phosphate, copolymers of the polymerizable phosphate and other monomers copolymerizable with the polymerizable phosphate can be obtained. The polymerizable phosphate is preferably one or more types selected from 2-methacryloyloxyethyl phosphate and 2-acryloyloxyethyl phosphate. Also, as the monomer polymerizable with the polymerizable phosphate, monomers (hereinafter referred to as "monomer A") represented by the following formula (A) are preferable.

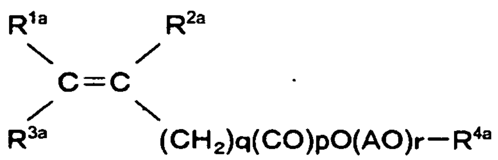
(A)

In the formula, $R^{1a}$ and $R^{2a}$ respectively represent a hydrogen atom or an alkyl group having 1 to 5 carbon atoms, a methyl group being preferable, and $R^{3a}$ represents a hydrogen atom or - $(CH_2)_q(CO)_pO(AO)_rR^{4a}$, wherein AO represents an oxyalkylene group having 2 to 4 carbon atoms or an oxystyrene group, p denotes a number of 0 or 1, q

denotes a number of 0 to 2, r denotes the average added mole number of AOs and denotes a number from 3 to 300 and $R^{4a}$ represents a hydrogen atom or an alkyl group having 1 to 18 carbon atoms.

In the monomer A, $R^{1a}$ and $R^{2a}$ in the formula (A) respectively represent a hydrogen atom or a methyl group, particularly a methyl group being preferable. $R^{3a}$ represents a hydrogen atom or $-(CH_2)_q(CO)_pO(AO)_rR^{4a}$, a hydrogen atom being preferable. Examples of an unsubstituted group which $(R^{1a})(R^{3a})C=C(R^{2a})CH_2)_q-$ in the formula (A) forms include a vinyl group, allyl group and methallyl group.

When p is 0, AO and $(CH_2)_q$ are bound by an ether bond and when p is 1, AO and $(CH_2)_q$ are bound by an ester bond. q is a number from 0 to 2, preferably 0 or 1 and more preferably 0. AO represents an oxyalkylene group having 2 to 4 carbon atoms or an oxystyrene group, is preferably an oxyalkylene group having 2 to 4 carbon atoms and more preferably contains an ethyleneoxy group (hereinafter referred to as "EO group"), and contains EO groups in an amount of more preferably 70 mol% or more, even more preferably 80 mol% or more and even more preferably 90 mol% or more, and it is even more preferable that all AOs are EO groups. r denotes the average added mole number of AOs and denotes a number from 3 to 300, preferably a number from 5 to 250 and even more preferably a number from 3 to 200. The r repeat units on the average may include different AO's, which may be connected by random addition, block addition or mixture of these additions. For example, AO may include a propylene oxide group or the like besides an EO group.

In the case of using the polymer as a hydraulic composition dispersant, for example, r in the formula (A) is preferably 3 to 300, more preferably 3 to 150 and even more preferably 3 to 120 from the viewpoint of more reducing the viscosity of concrete.

$R^{4a}$ represents a hydrogen atom or an alkyl group having 1 to 18 carbon atoms. $R^{4a}$ is an alkyl group having, preferably, 1 to 12, more preferably 1 to 4 and even more preferably 1 or 2 carbon atoms and is even more preferably a methyl group.

As the monomer A, (half) esterified products of one-terminal alkyl blocked polyalkylene glycol such as methoxypolyethylene glycol, methoxypolypropylene glycol, methoxypolybutylene glycol, methoxypolystyrene glycol or ethoxypolyethylene polypropylene glycol and a (meth)acrylic acid or maleic acid or etherified products of (meth)allyl alcohol, and $C_{2-4}$ alkylene oxide adducts having 2 to 4 carbon atoms of (meth)acrylic acids, maleic acid or (meth)allyl alcohols are preferably used.

The monomer A is more preferably esterified products of alkoxy and particularly, methoxypolyethylene glycol and (meth)acrylic acids. Specific examples of these esterified products may include ω-methoxypolyoxyalkylene methacrylate ω-methoxypolyoxyalkylene acrylate and the like, ω-methoxypolyoxyalkylene methacrylate being more preferable.

Also, as monomers other than the monomer A, monocarboxylic acid type monomers such as (meth)acrylic acids and crotonic acid, dicarboxylic acid type monomers such as maleic acid, itaconic acid and fumaric acid or their anhydrides or salts (for example, alkali metal salts, alkali earth metal salts, ammonium salts, mono, di or trialkyl (2 to 8 carbon atoms) ammonium salts in which the hydroxyl group may be substituted) or esters may be used. Among these compounds, preferable examples may include (meth)acrylic acids, maleic acid and maleic acid anhydride and more preferable examples may include (meth)acrylic acids or their alkali metal salts. Here, the (meth)acrylic acid means an acrylic acid and/or a methacrylic acid. Other examples of other monomers may also include allylsulfonic acid, methallylsulfonic acid, alkali metal salts, alkali earth metal salts, ammonium salts or amine salts of any of these acids. Further examples of other monomers may include a (meth)acrylamide, N-methyl(meth)acrylamide, N,N-dimethyl(meth)acrylamide, 2-(meth)acrylamide-2-methasulfonic acid, 2-(meth)acrylamide-2-ethanesulfonic acid, 2-(meth)acrylamide-2-propanesulfonic acid, styrene styrenesulfonic acid and the like.

As to specific polymerization conditions, for example, a phosphate polymer can be produced by optionally adding a chelating agent, and the like to an aqueous medium system and adding dropwise the polymerization phosphate composition, heated to a predetermined temperature, in the presence of a polymerization inhibitor to carry out a polymerization reaction.

Also, in the polymerization reaction, the polymerization is run in the presence of a chain transfer agent. When the monomer A is used, the chain transfer agent is used in a ratio of, preferably, 4 mol% or more, more preferably 6 mol% or more and even more preferably 8 mol% or more based on the total molar number of monophosphate body, diphosphate body and monomer A in the polymerizable phosphate. The upper limit of the ratio is preferably 100 mol% or less, more preferably 60 mol% or less, even more preferably 30 mol% or less and even more preferably 15 mol% or less. Examples of the chain transfer agent include thiol type chain transfer agents, halogenated hydrocarbon type chain transfer agents and the like, thiol type chain transfer agents being preferable. As the thiol type chain transfer agents, those having a -SH group are preferable. Those represented by the formula, HS-R-Eg (wherein R represents a group derived from hydrocarbons having 1 to 4 carbon atoms, E represents -OH, -COOM, -COOR' or $-SO_3M$ group, M represents a hydrogen atom, a monovalent metal, a divalent metal, an ammonium group or an organic amine group, R' represents an alkyl group having 1 to 10 carbon atoms and g denotes an integer from 1 or 2) are preferable. Examples of the thiol type transfer agent include mercaptoethanol, thioglycerol, thioglycolic acid, 2-mercaptopropionic acid, 3-mercaptopropionic acid, thiomalic acid, octyl thioglycolate octyl, 3-mercaptopropionate and the like. Mercaptopropionic acid and mercaptoethanol are preferable and mercaptopropionic acid is more preferable from the viewpoint of a chain transfer effect in the copolymerization reaction. These compounds may be used either singly or in combinations of two or more.

The above production is preferably carried out by the solution polymerization method using an aqueous type solvent (water or a mixture of water and an organic solvent). As an aqueous polymerization initiator, an ammonium salt or alkali metal salt of persulfuric acid or hydrogen peroxide, or water-soluble azo compounds such as 2,2'-azobis(2-amidinopropane)dihydrochloride or 2,2'-azobis(2-methylpropionamide)dihydrate may be used. Promoters such as sodium hydrogen sulfite and amine compounds may be used in combination with the polymerization initiator.

Also, in the polymerization reaction, the polymerizable phosphate composition is introduced into the reaction system while keeping it at a temperature from 40 to 100°C. In the polymerization reaction, the pH of the reaction system (preferably from the start to end of the reaction) is preferably 7 or less from the viewpoint of the uniformity of the monomer solution and preventing the monomer solution from being gelled. The pH of the reaction system is more preferably 0.1 to 6 and even more preferably 0.2 to 4.5. Also, the pH of the polymerizable phosphate composition is preferably made to be 7 or less upon use and this pH is measured at 20°C.

Also, in the step (II), the reaction temperature (temperature in the reaction system) is in a range from preferably 40 to 100°C, more preferably 50°C to 100°C and even more preferably 60°C to 95°C, and the reaction time is preferably 0.1 hours to 10 hours and more preferably 0.5 to 5 hours. The reaction system is neutralized with an alkali agent (sodium hydroxide) according to the need, to obtain a phosphate polymer according to the present invention.

The production method of the present invention is suitable as a method of producing a powder dispersant such as a hydraulic composition containing the phosphate polymer of the present invention.

The polymerizable phosphate composition containing the polymerizable phosphate having an unsaturated carbon bond in its molecule and the polymerization inhibitor are heated to 40 to 100°C and then added in the reaction system to undergo a polymerization reaction. The method of producing a phosphate polymer may be carried out according to the above step (II).

Brief description of the invention

Fig. 1 is schematic views of a torque tester and a recorder used to measure viscosity in a test example. Fig. 2 shows the relation between the torque and viscosity of a polyethylene glycol (Mw: 20,000) used to calculate the viscosity in a test example.

Examples

The following examples are to explain embodiments of the present invention and exemplify the present invention and are not intended to be limiting of the present invention.

The conditions of gas chromatography and $^{31}$P-NMR which were used for the analysis of the composition in the following examples and comparative examples are shown below.

<Condition of $^{31}$P-NMR>

Measuring instrument: Mercury 400, 500 Ω Hertz Solvent: Heavy methanol
Measuring temperature: Ambient temperature
Measuring condition: Inverse-gated decoupling method

Observed data points: 10336
Pulse width: (5.833μsec) 35° pulse
Range of measurement: 6459.9 Hz
Integrating number of revolutions: 128

<Condition of $^{1}$H-NMR>

- Measuring instrument: Mercury-400 (Varian)
- Solvent: Mixed solution of heavy water/heavy methanol
- Measuring condition: Pulse width 45°pulse

Range of measurement: 6410.3 Hz
Integrating number of revolutions: 8

<Condition of gas chromatography>

- Sample: Methylated by diazomethane
- Column: Ultra ALLOY, 15 m × 0.25 mmid × 0.15μmdf
- Carrier gas: He, sprit ratio 50 : 1
- Column temperature: 40°C (5 min) → 10°C /min→300°C /15 min
- Injection port temperature: 300°C
- Detector temperature: 300°C

Also, the condition of gel permeation chromatography (GPC) adopted to measure the molecular weight of the polymer in the following examples and comparative examples is shown below.

<Condition of GPC>

Column: G4000PWXL + G2500PWXL (Toso)
Eluent: 0.2 M phosphoric acid buffer/$CH_3CN$ = 9/1
Flow rate: 1.0 ml/min
Column temperature: 40°C
Detector: RI
Sample size: 0.2 mg/ml
Standard material: Based on polyethylene glycol

Example 1

(I) Production of a polymerizable phosphate (Step (I))

A reaction container which had a capacity of 1000 ml, immersed in cooled water, was charged with 371.5 g of 2-hydroxyethylmethacrylate, 50.5 g of 75% phosphoric acid and 0.1 g of hydroquinone monomethyl ether. The mixture was stirred for 0. 5 hours and 178 g of phosphorous pentoxide was charged at 45 to 50°C for one hour until the addition was finished in such a manner as to keep the reaction system at 50°C or less. The ratio defined by the above formula (I) was 3.0. Then, the mixture was heated to 80°C and reacted for 5 hours. After it was confirmed that the amount of 2-hydroxyethylmethacrylate was 1% or less by high-performance liquid chromatography, the reaction mixture was cooled. The viscosity of the obtained product was 2350 mPa·s at ambient temperature (25°C). Also, the amount of hydroquinone monomethyl ether which was a polymerization inhibitor in this product was measured by $^1$H-NMR and as a result, the amount of hydroquinone monomethyl ether was 0.03% by weight.

(II) Production of a phosphate polymer (Step (II))

0.6 g (0.1% by weight, based on the weight of the polymerizable phosphate) of hydroquinone monomethyl ether was added to the product containing 2-methacryloyloxyethyl phosphate to make a polymerizable phosphate composition including the polymerizable phosphate and the polymerization inhibitor, which was then stored in a 80°C thermostat bath for 24 hours. The compositional ratios of a monoester body, diester body and triester body of the polymerizable phosphate in the composition after the product was stored are shown in Table 1 (here, the compositional ratios are values when the total of the monoester body, diester body and triester body and ethylene glycol diester body was set to 100% (ratio by weight)). Also, the amount of hydroquinone monomethyl ether which was a polymerization inhibitor in this product was measured by $^1$H-NMR and as a result, the hydroquinone monomethyl ether was contained in an amount of 0.06% by weight.

Next, a four-neck flask having a capacity of 1000 ml which was prepared in advance was charged with 246 g of water and the atmosphere in the flask was substituted with nitrogen while stirring the water to raise the temperature in the flask to 80°C. Next, 27.9 g of the above polymerizable phosphate composition was weighed and added in a beaker at 80°C (180 mPa·s), and then added in a solution prepared by mixing and dissolving 55 g of ω-methoxypolyethylene

glycol monomethacrylate (added mole number of ethylene oxide: 23) and 2.2 g of mercaptopropione in 55 g of ion exchange water. 27.5 g (among 27.9 g) of the above polymerizable phosphate composition was used (viscosity when charged was 180 mPa·s). This prepared solution and a solution prepared by dissolving 3.76 g of ammonium persulfate in 45 g of water were respectively added dropwise in the flask over 1.5 hours. The pH during reaction was 1.4. After the reaction solution was aged for one hour, a solution obtained by dissolving 1.88 g of ammonium persulfate in 15 g of water was added dropwise to the reaction mixture over 30 minutes. Thereafter, the reaction solution was aged at 80°C for 2 hours. The pH of the reaction solution was 1.3. After the aging was finished, a 20% sodium hydroxide solution was added to adjust the solution to pH 5.5, thereby obtaining a phosphate polymer (polymer solution). When the molecular weight of the obtained polymer was measured by GPC, the weight average molecular weight of the polymer was 29,000.

Example 2

(II) Production of a phosphate polymer (Step (II))

0.6 g of (0.1% by weight, based on the polymerizable phosphate) of hydroquinone monomethyl ether was added to the product obtained in Example 1 and containing 2-methacryloyloxyethyl phosphate to prepare a polymerizable phosphate composition containing a polymerizable phosphate and a polymerization inhibitor and the obtained polymerizable phosphate composition was stored in a 80°C thermostat bath for one hour. The compositional ratios of a monoester body, diester body and triester body of the polymerizable phosphate in the composition after the product was stored are shown in Table 1 (wherein, the compositional ratios are values when the total of the monoester body, diester body and triester body and ethylene glycol diester body was set to 100% (ratio by weight)). Also, the amount of hydroquinone monomethyl ether which was a polymerization inhibitor in this product was measured by $^1$H-NMR and as a result, the hydroquinone monomethyl ether was contained in an amount of 0.09% by weight. Thereafter, the process was shifted to the next polymerization step to obtain a polymer in the same condition as in Example 1 except that 27.0 g of the polymerizable phosphate composition was charged (viscosity when charged was 190 mPa·s). The molecular weight of the obtained polymer was measured by GPC, to find that the weight average molecular weight was 29,000.

Comparative Example 1

(I) Production of a polymerizable phosphate (Step (I))

A reaction container which had a capacity of 1000 ml, was immersed in cooled water, was charged with 371.5 g of 2-hydroxyethylmethacrylate, 50.5 g of 75% phosphoric acid and 0.1 g of hydroquinone monomethyl ether. The mixture was stirred for 0.5 hours and 178 g of phosphorous pentoxide (effective content: 98.5%) was charged at 100°C to 105°C for one hour until the addition was finished. The ratio defined by the above formula (I) was 3.0. Then, the mixture was cooled to 80°C and reacted for 5 hours. After it was confirmed that the amount of 2-hydroxyethylmethacrylate was 1% or less by high-performance liquid chromatography, the reaction mixture was cooled. The viscosity of the obtained product was 2350 mPa·s at ambient temperature (25°C). Also, the amount of hydroquinone monomethyl ether which was a polymerization inhibitor in this product was measured by $^1$H-NMR and as a result, the amount of hydroquinone monomethyl ether was 0.02% by weight.

(II) Production of a phosphate polymer (Step (II))

0.6 g (0.1% by weight, based on the weight of the polymerizable phosphate (product)) of hydroquinone monomethyl ether was added to the product obtained above to make a polymerizable phosphate composition including the polymerizable phosphate and the polymerization inhibitor, which was then stored in a 80°C thermostat bath for 24 hours. The compositional ratios of a monoester body, diester body and triester body of the polymerizable phosphate and ethylene glycol diester body in the composition after the product was stored are shown in Table 1 (where, the compositional ratios are values when the total of the monoester body, diester body and triester body and ethylene glycol diester body was set to 100% (ratio by weight)). Also, the amount of hydroquinone monomethyl ether which was a polymerization inhibitor in this product was measured by $^1$H-NMR and as a result, the hydroquinone monomethyl ether was contained in an amount of 0.05% by weight. Thereafter, the process was shifted to the next polymerization step to obtain a polymer in the same condition as in Example 1 except that 27.2 g of the polymerizable phosphate composition was charged (viscosity when charged was 180 mPa·s). The molecular weight of the obtained polymer was measured by GPC, to find that the weight average molecular weight was 27,000.

Example 3

(II) Production of a phosphate polymer

The product obtained in the step (I) of Example 1 was stored in a 80°C thermostat bath for 24 hours without adding hydroquinone monomethyl ether thereto. The compositional ratios of a monoester body, diester body and triester body of the polymerizable phosphate and ethylene glycol diester body in the composition after the product was stored are shown in Table 1 (wherein, the compositional ratios are values when the total of the monoester body, diester body and triester body and ethylene glycol diester body was set to 100% (ratio by weight)). Also, the amount of hydroquinone monomethyl ether, a polymerization inhibitor, in the stored composition, was measured by $^1$H-NMR and as a result, the hydroquinone monomethyl ether was contained in an amount of 0.01% by weight. Thereafter, the process was shifted to the next polymerization step to obtain a polymer in the same condition as in Example 1 except that 27.4 g of the polymerizable phosphate composition was charged (viscosity when charged was 180 mPa·s). The molecular weight of the obtained polymer was measured by GPC, to find that the weight average molecular weight was 28,000.

Table 1

| | | Example 1 | Example 2 | Comparative example 1 | Comparative example 3 |
|---|---|---|---|---|---|
| Compositional ratio (% by weight) | Monoester body | 64.5 | 64.3 | 51.1 | 48.5 |
| | Diester body | 27.3 | 27.5 | 31.9 | 29.9 |
| | Triester body | 1.5 | 1.6 | 3.5 | 4.1 |
| | Ethylene glycol diester body | 6.7 | 6.6 | 13.5 | 17.5 |
| | Total | 100 | 100 | 100 | 100 |
| Evaluation of an odor | | ○ | ○ | △ | ○ |

In the table, "Evaluation of an odor" was conducted by functionally evaluating the odor of the obtained polymer solution by three panelists. A sample having a slight odor was rated as "○", a sample having a relatively strong odor was rated as "ρ" and a sample having a strong odor was rated as "×". The same evaluation result of two or more panelists among three panelists is shown in Table 1.

Test Example 1

(I) Preparation and treatment of a polymerizable phosphate composition

A reaction container which had a capacity of 1000 ml, immersed in cooled water, was charged with 371.5 g of 2-hydroxyethylmethacrylate, 50.5 g of 75% phosphoric acid and 0.1 g of hydroquinone monomethyl ether. The mixture was stirred for 0.5 hours and 178 g of phosphorous pentoxide (effective content: 98.5%) was charged at 55 to 60°C for one hour until the addition was finished in such a manner as to keep the reaction system at 60°C or less. The ratio defined by the above formula (I) was 3.0. Then, the mixture was heated to 80°C and reacted for 5 hours. After it was

confirmed that the amount of 2-hydroxyethylmethacrylate was 1% or less by high-performance liquid chromatography, the reaction mixture was cooled. In the product, the total concentration of a monoester body, diester body and triester body of the polymerizable phosphate and ethylene glycol diester body was 73.0% by weight. Here, the amount of hydroquinone monomethyl ether which was a polymerization inhibitor in this product was measured by $^{1}$H-NMR and as a result, the hydroquinone monomethyl ether was contained in an amount of 0.03% by weight.

Test Example 1-1

0.6 g (0.1% by weight, based on the weight of the polymerizable phosphate) of hydroquinone monomethyl ether (indicated by MEHQ in Table 2) was added to the product to make a composition including the polymerizable phosphate and the polymerization inhibitor, which was then stored in a 80°C thermostat bath for 24 hours. The composition after stored was analyzed by using $^{31}$P-NMR and gas chromatography in the same condition as above to calculate the compositional ratio. Also, the amount of hydroquinone monomethyl ether which was a polymerization inhibitor in this product was measured by $^{1}$H-NMR and as a result, the hydroquinone monomethyl ether was contained in an amount of 0.06% by weight.

Test Example 1-2

The compositional ratio of a composition stored without added hydroquinone monomethyl ether to the obtained reaction product was calculated in the same manner as above. Also, the amount of hydroquinone monomethyl ether which was a polymerization inhibitor in this product was measured by $^{1}$H-NMR and as a result, the hydroquinone monomethyl ether was contained in an amount of 0.01% by weight.

In this case, the compositional ratios are values when the total of the monoester body, diester body and triester body and ethylene glycol diester body was set to 100% (ratio by weight).

Test Example 2

(I) Preparation and treatment of a polymerizable phosphate composition

A reaction container which had a capacity of 1000 ml, immersed in cooled water, was charged with 371.5 g of 2-hydroxyethylmethacrylate, 50.5 g of 75% phosphoric acid and 0.1 g of hydroquinone monomethyl ether. The mixture was stirred for 0.5 hours and 178 g of phosphorous pentoxide (effective content: 98.5%) was charged at 55 to 60°C for one hour until the addition was finished in such a manner as to keep the reaction system at 60°C or less. The ratio defined by the above formula (I) was 3.0. Then, the mixture was heated to 80°C and reacted for 5 hours. After it was confirmed that the amount of 2-hydroxyethylmethacrylate was 1% or less by high-performance liquid chromatography, the reaction mixture was cooled. In the product, the total concentration of a monoester body, diester body and triester body of the polymerizable phosphate and ethylene glycol diester body was 73.0% by weight. Here, the amount of hydroquinone monomethyl ether which was a polymerization inhibitor in this product was measured by $^{1}$H-NMR and as a result, the hydroquinone monomethyl ether was contained in an amount of 0.03% by weight.

Test Example 2-1

0.6 g (0.1% by weight, based on the weight of the polymerizable phosphate) of hydroquinone (indicated by HQ in Table 2) was added to the obtained product to make a composition including the polymerizable phosphate and the polymerization inhibitor, which was then stored in a 80°C thermostat bath for 24 hours. The composition after stored was analyzed by using $^{31}$P-NMR and gas chromatography in the same condition as above to calculate the compositional ratio. Also, the amounts of hydroquinone and hydroquinone monomethyl ether which were polymerization inhibitors in this composition were measured by $^{1}$H-NMR and as a result, the hydroquinone monomethyl ether was contained in an amount of 0.07% by weight.

Test Example 2-2

The compositional ratio of a composition stored without added hydroquinone to the obtained reaction product was calculated in the same manner as above. The results are shown in Table 2. Also, the amount of the polymerization inhibitor in this product was measured by $^{1}$H-NMR and as a result, the hydroquinone monomethyl ether which was added first was contained in an amount of 0.01% by weight.

In this case, the compositional ratios are values when the total of the monoester body, diester body and triester body and ethylene glycol diester body was set to 100% (ratio by weight).

Table 2

| | | Just after produced | After stored | | | |
|---|---|---|---|---|---|---|
| | | | Test example 1-1 | Test example 1-2 | Test example 2-1 | Test example 2-2 |
| | | | MEHQ is added | MEHQ is not added | HQ is added | HQ is not added |
| Compositional ratio (% by weight) | Monoester body | 59.4 | 60.3 | 48.5 | 59.7 | 47.9 |
| | Diester body | 28.3 | 27.8 | 29.9 | 28.4 | 30.7 |
| | Triester body | 1.9 | 2.1 | 4.1 | 1.8 | 4.4 |
| | Ethylene glycol diester body | 10.4 | 9.8 | 17.5 | 10.1 | 17.0 |
| | Total | 100 | 100 | 100 | 100 | 100 |

When the test examples 1-1 and 2-1 in which the hydroquinone was added to the obtained product are compared with the test examples 1-2 and 2-2 in which the hydroquinone was not added, the content of a monoester body is larger in the test examples 1-1 and 2-1 than in the test examples 1-2 and 2-2. This reason is inferred to be that the addition of the hydroquinone brings about the result that the decomposition is limited. Then, it is considered that a change in the composition of the polymerizable phosphate during storage can be suppressed and the dispersibility of the polymer using the polymerizable phosphate in an inorganic powder can be stably developed.

Example 4

A four-neck flask having a capacity of 1000 ml, which was prepared in advance, was charged with 246 g of water and the atmosphere in the flask was substituted with nitrogen while stirring the water to raise the temperature in the flask to 80°C in a nitrogen atmosphere. Then, a four-neck flask having a capacity of 1000 ml, which was prepared in advance, was charged with 246 g of water and the atmosphere in the flask was substituted with nitrogen while stirring the water to raise the temperature in the flask to 80°C in the nitrogen atmosphere. Then, 27.9 g of the above polymerizable phosphate composition (product in which MEHQ was added) obtained in the test example 1-1 shown in Table 2 and kept at the above temperature as it was after the storing treatment was weighed in a beaker, and then added in a solution prepared by mixing and dissolving 55 g of ω-methoxypolyethylene glycol monomethacrylate (added mole number of ethylene oxide: 23) and 2.2 g of mercaptopropione in 55 g of ion exchange water. 27.1 g (among 27.9 g) of the above polymerizable phosphate composition was charged (viscosity when charged was 180 mPa·s). This prepared solution and a solution prepared by dissolving 3.76 g of ammonium persulfate in 45 g of water were respectively added dropwise in the flask over 1.5 hours. The pH of the reaction system during reaction was 1.3. After the reaction solution was aged for one hour, a solution obtained by dissolving 1.88 g of ammonium persulfate in 15 g of water was added dropwise to the reaction mixture over 30 minutes. Thereafter, the reaction solution was aged at 80°C for 2 hours. After the aging was finished, a 20% sodium hydroxide solution was added to adjust the solution to pH 5.5, thereby obtaining a copolymer. When the molecular weight of the obtained copolymer was measured, the weight average molecular weight of the copolymer was 29,000.

Here, the above polymerizable phosphate composition (product in which no MEHQ was added) obtained in the test example 1-2 shown in Table 2 and kept at the above temperature as it was after the storing treatment was used to produce a copolymer and as a result, the weight average molecular weight was 27,000. At this time, a polymer was obtained in the same polymerization condition as above except that 27.1 g (among 27.9 g) of the above polymerizable

phosphate composition was charged (viscosity when charged was 180 mPa·s).

Example 5

A reaction container which had a capacity of 1000 ml, immersed in cooled water, was charged with 371.5 g of 2-hydroxyethylmethacrylate, 50.5 g of 75% phosphoric acid and 0.1 g of hydroquinone monomethyl ether. The mixture was stirred for 0.5 hours and 178 g of phosphorous pentoxide was charged at 55 to 60°C for 5 hours until the addition was finished in such a manner as to keep the reaction system at 60°C or less. The ratio defined by the above formula (I) was 3.0. Then, the mixture was heated to 80°C and reacted for 3 hours. The content of methacrylic acids produced by hydrolysis of the obtained product was quantitatively measured by high-performance liquid chromatography and as a result, the content was 0.4%. Hereinafter a phosphate polymer was obtained in the same manner as in the step (II) of Example 1. The molecular weight of the obtained polymer was measured by GPC to find that the weight average molecular weight was 28,000.

Example 6

A reaction container which had a capacity of 1000 ml, immersed in cooled water, was charged with 371.5 g of 2-hydroxyethylmethacrylate, 22.7 g of water and 0.1 g of hydroquinone monomethyl ether. The mixture was stirred for 0.5 hours and 210 g of phosphorous pentoxide (effective content: 98.5%) was charged at a temperature not exceeding 60°C for 5 hours until the addition was finished. The ratio defined by the above formula (I) was 3.0. Then, the mixture was heated to 80°C and reacted for 3 hours. The content of methacrylic acids produced by hydrolysis of the obtained product was quantitatively measured by high-performance liquid chromatography and as a result, the content was 6.5%. Hereinafter a phosphate polymer was obtained in the same manner as in the step (II) of Example 1. The molecular weight of the obtained polymer was measured by GPC to find that the weight average molecular weight was 26,000.

Example 7

A glass reaction container (four-neck flask) equipped with a stirrer was charged with 366 g of water and the atmosphere in the container was substituted with nitrogen while stirring the water to raise the temperature in the flask to 80°C in a nitrogen atmosphere. Next, 72.6 g of the above polymerizable phosphate composition (one stored at 80°C for 24 hours after hydroquinone monomethyl ether was added) used in the step (II) of Example 1 was weighed and added in a beaker at 80°C (viscosity: 180 mPa·s), and then added in and mixed with a solution prepared by mixing and dissolving 450 g (effective component: 60.8%, water content: 35%) of ω-methoxypolyethylene glycol monomethacrylate (average added mole number of ethylene oxide: 23) and 4.5 g of 3-mercaptopropionic acid. 71.6 g (among 72.6 g) of the above polymerizable phosphate composition was charged. Both of this prepared solution and a solution prepared by dissolving 8.4 g of ammonium persulfate in 48 g of water were respectively added dropwise in the flask over 1.5 hours. The pH of the reaction slution during reaction was 1.4. After the reaction solution was aged for one hour, a solution obtained by dissolving 1.8 g of ammonium persulfate in 10 g of water was added dropwise to the reaction mixture over 30 minutes. Thereafter, the reaction solution was aged at the same temperature (80°C) for 1.5 hours. The pH of the reaction solution was 1.3. After the aging was finished, a 32% sodium hydroxide solution was added to adjust the solution to pH 5.5, thereby obtaining a phosphate polymer (polymer solution). When the molecular weight of the obtained polymer was measured by GPC, the weight average molecular weight of the polymer was 35,000.

Comparative Example 2

A glass reaction container (four-neck flask) equipped with a stirrer was charged with 366 g of water and the atmosphere in the container was substituted with nitrogen while stirring the water to raise the temperature in the container to 80°C in a nitrogen atmosphere. Next, 72.6 g of the above polymerizable phosphate composition (one stored at 80°C for 24 hours after hydroquinone monomethyl ether was added) used in the step (II) of Example 1 was cooled to 25°C (viscosity: 2350 mPa·s) and weighed in a beaker, and then added in a solution prepared by mixing and dissolving 450 g (effective component: 60.8%, water content: 35%) of ω-methoxypolyethylene glycol monomethacrylate (average added mole number of ethylene oxide: 23) and 4.5 g of mercaptopropionic acid, followed by mixing. 50.1 g (among 72.6 g) of the above polymerizable phosphate composition was charged. Both of this prepared solution and a solution prepared by dissolving 8.4 g of ammonium persulfate in 48 g of water were respectively added dropwise in the flask over 1.5 hours. The pH of the reaction solution was 1.4. After the reaction solution was aged for one hour, a solution obtained by dissolving 1.8 g of ammonium persulfate in 10 g of water was added dropwise to the reaction mixture over 30 minutes. Thereafter, the reaction solution was aged at the same temperature (80°C) for 1.5 hours. The pH of the reaction solution was 1.3. After the aging was finished, an aqueous 32% sodium hydroxide solution was added to adjust the solution to

pH 5.5, thereby obtaining a phosphate polymer. When the molecular weight of the obtained polymer was measured by GPC, the weight average molecular weight of the polymer was 27,000.

Test Example 3 and Comparative Test Example 3

Using the copolymers obtained in Examples 1 and 7 and Comparative Example 2, a test for mortar formulations shown in Table 3 was made. The results are shown in Table 4. The evaluation was made as to the dispersibility and viscosity in the following manner.

(1) Mortar formulation

Table 3

| w/c (%) | Unit amount (g/batch) | | |
|---|---|---|---|
| | W | C | S |
| 40 | 160 | 400 | 700 |

The materials to be used in Table 3 are as follows.

C: (Mixture (1 : 1) of ordinary Portland cements manufactured by Taiheiyo Cement Corporation and Sumitomo Osaka Cement Co., Ltd.)
W: Ion exchange water
S: Pit sand from Kimitsu, Chiba prefecture (product passed through a screen having an opening of 3.5 mm)
W/C: Weight percentage (% by weight) of water (W) to cement (C)

(2) Preparation of mortar

S in Table 2 was poured into a container (1 L stainless beaker: internal diameter 120 mm) in an amount of about 1/2 of the formulation amount, then C was poured and also the remainder S was poured. As the stirrer, a stirrer (trademark: Z-2310, manufactured by EYELA TOKYO RIKAKIKAI Co., LTD., Stirring bar: height 50 mm, internal diameter 5 mm × 6 bars/length 110 mm) was used to carry out dry mixing at 200 rpm for 25 seconds. Then, a mixed solution of the polymer and water which was mixed in advance was poured in the container over 5 seconds and materials stuck to the wall surface and materials existing between stirring bars were scraped for 30 seconds after pouring, water was added in the container and the mixture was then kneaded for 3 minutes to prepare mortar. An antifoam agent was added according to the need to adjust the mixture such that the amount of air to be entrained was 2% or less.

(3) Evaluation

(3-1) Dispersibility

A corn having a top opening diameter of 70 mm, a bottom opening diameter of 100 mm and a height of 60 mm was used to evaluate the dispersibility of each mortar at 20°C by the addictive amount (% by weight based on the cement, shown in Table by %) of the copolymer necessary to attain a mortar flow value of 200 mm. This mortar flow value (200 mm) is an average value of a maximum value of the mortar flow value and a mortar flow value measured using a line segment having a length of 1/2 that of the line segment in a direction perpendicular to the direction in which the maximum flow value is obtained. The smaller the addictive amount of the copolymer is, the stronger the dispersibility is.

(3-2) Viscosity

A recorder was connected to a torque tester shown in Fig.1 to measure the torque of the mortar. The viscosity of the mortar was calculated from the torque of the mortar based on the torque-viscosity relational expression of a polyethylene glycol (Mw: 20,000) shown in Fig. 2. When the formula of the torque-viscosity relational expression of a polyethylene glycol was made, the recorder recorded torque output voltage (mV) in the following condition; monitor output 60 W and output signal DC-0-5 V.

Table 4

| | Copolymer | Dispersibility % | Mortar viscosity (mPa·s) |
|---|---|---|---|
| Test Example 3-1 | Example 1 | 0.11 | 2770 |
| Test Example 3-2 | Example 7 | 0.10 | 2770 |
| Test Example 3 | Comparative example 2 | 0.18 | 2950 |

## Claims

1. A method of producing a phosphate polymer, comprising the following steps (I) and (II):

step (I) : a step comprising adding a phosphating agent (2) and a polymerization inhibitor to a reaction system comprising an organic hydroxy compound (1) represented by the following formula (1) to react the organic hydroxy compound (1) with the phosphating agent (2) and produce a polymerizable phosphate, wherein the organic hydroxy compound (1) and the phosphating agent (2) are used in such a condition that the value of the following equation (I) is 2.0 to 4.0 and the reaction system is kept at a temperature of from 40°C to 75°C from starting of the addition of the phosphating agent (2) until finishing of the addition of the phosphating agent (2):

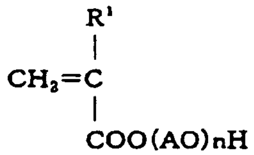

(1)

wherein, $R^1$ represents a hydrogen atom or a hydrocarbon group having 1 to 10 carbon atoms, A represents an alkylene group having 2 to 12 carbon atoms and n denotes a number of from 0.1 to 20 on the average;

$$\frac{\left[\text{the mole number of water containing } n(H_2O)\text{, included in the phosphating agent represented by } P_2O_5\cdot n(H_2O)\right] + \left[\text{the mole number of an organic hydroxy compound}\right]}{\text{(the mole number of the phosphating agent based on } P_2O_5\text{)}} \qquad (I)$$

step (II): heating the polymerizable phosphate composition which is obtained in step (I) and contains the polymerizable phosphate and the polymerization inhibitor to 40°C to 100°C and adding the heated composition to a reaction system to polymerize the polymerizable phosphate or copolymerize the polymerizable phosphate with a monomer copolymerizable with the polymerizable phosphate and thereby produce a phosphate polymer, wherein the (co)polymerization is performed in the presence of a chain transfer agent and by solution polymerization in an aqueous type solvent.

2. The production method of Claim 1, wherein the polymerization of the polymerizable phosphate or the polymerization of the polymerizable phosphate and the monomer copolymerizable with the polymerizable phosphate is carried out at a pH of 7 or less in the step (II).

3. The production method of Claims 1 or 2, wherein the time taken from the start to the end of the addition of the phosphating agent (2) to the reaction system in the step (I) is within 20 hours.

4. The production method of any one of Claims 1 to 3, wherein the organic hydroxy compound (1) used in the step (I) is an alkylene oxide adduct to a methacrylic acid or acrylic acid (the alkylene oxide has 2 to 12 carbon atoms and the alkylene oxide average added mole number is 0.1 to 20).

5. The production method of any one of Claims 1 to 4, wherein the phosphating agent (2) used in the step (I) is at least one selected from the group consisting of phosphorous pentoxide, phosphoric acid and polyphosphoric acid.

6. The production method of Claim 5, wherein the phosphating agent is a combination of orthophosphoric acid and phosphorous pentoxide.

7. The production method of any one of Claims 1 to 6, wherein the polymerization inhibitor used in the step (I) and/or the step (II) is at least one selected from the group consisting of a quinone aromatic type compound and a nitrosamine type compound.

8. The production method of any one of Claims 1 to 7, wherein the polymerizable phosphate used in the step (II) is at least one selected from the group consisting of 2-methacryloyloxyethyl phosphate and 2-acryloyloxyethyl phosphate.

9. The production method of any one of Claims 1 to 8, wherein the polymerizable phosphate composition used in the step (II) comprises the polymerization inhibitor in an amount of 0.1 to 10% by weight.

10. The production method of Claim 9, comprising an addition step to make up the consumed polymerization inhibitor prior to the step (II).

11. The production method of any one of Claims 1 to 10, wherein the monomer polymerizable with the polymerizable phosphate used in the step (II) is a monomer represented by the following formula (A):

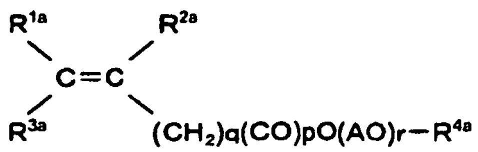

(A)

Wherein, $R^{1a}$ and $R^{2a}$ respectively represent a hydrogen atom or a hydrocarbon group having 1 to 5 carbon atoms, and $R^{3a}$ represents a hydrogen atom or $-(CH_2)_q(CO)_pO(AO)_rR^{4a}$, wherein AO represents an oxyalkylene group having 2 to 4 carbon atoms or an oxystyrene group, p denotes a number of 0 or 1, q denotes a number of 0 to 2, r denotes the average added mole number of AOs and denotes a number from 3 to 300 and $R^{4a}$ represents a hydrogen atom or an alkyl group having 1 to 18 carbon atoms.

12. A phosphate polymer composition comprising the phosphate polymer obtained in the production method of any one of Claims 1 to 11.

13. A powder dispersant comprising the phosphate polymer composition of Claim 12.

14. A material for a dispersant of concrete, comprising the phosphate polymer composition of claim 12.

15. A method of producing a concrete dispersant comprising adding the phosphate polymer composition as defined in claim 12 to a hydraulic composition.

**Patentansprüche**

1. Verfahren zur Erzeugung eines Phosphatpolymers, umfassend die folgenden Schritte (I) und (II):

   Schritt (I): ein Schritt, umfassend die Zugabe eines Phosphatierungsmittels (2) und eines Polymerisationsinitiators zu einem Reaktionssystem, umfassend eine organische Hydroxyverbindung (1), dargestellt durch die folgende Formel (1), zur Reaktion der organischen Hydroxyverbindung (1) mit dem Phosphatierungsmittel (2) und zur Erzeugung eines polymerisierbaren Phosphates, worin die organische Hydroxyverbindung (1) und das Phosphatierungsmittel (2) unter einer solchen Bedingungen verwendet werden, dass der Wert der folgenden Gleichung (I) 2,0 bis 4,0 ist und das Reaktionssystem bei einer Temperatur von 40-75°C von Beginn der Addition des Phosphatierungsmittels (2) bis zur Beendigung der Addition des Phosphatierungsmittels (2) gehalten wird:

   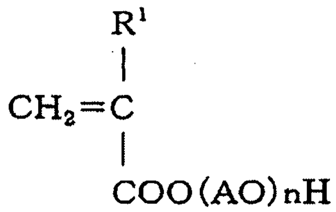

   (1)

   worin $R^1$ ein Wasserstoffatom oder eine Kohlenwasserstoffgruppe mit 1 bis 10 Kohlenstoffatomen, A eine Alkylengruppe mit 2 bis 12 Kohlenstoffatomen und n eine Zahl von 0,1 bis 20 im Schnitt ist,

$$\frac{\left[\text{Molzahl von Wasser, umfassend } n(H_2O)\text{, das im Phosphatierungsmittel der Formel enthalten ist, dargestellt durch } P_2O_5\cdot n(H_2O)\right] + \left[\text{Molzahl einer organischen Hydroxyverbindung}\right]}{(\text{Molzahl des Phosphatierungsmittels, bezogen auf } P_2O_5)} \quad \text{(I)}$$

   Schritt (II): Erwärmen der polymerisierbaren Phosphatzusammensetzung, die im Schritt (I) erhalten ist und das polymerisierbare Phosphat und den Polymerisationsinhibitor enthält, auf 40-100°C und Zugabe der erwärmten Zusammensetzung zu einem Reaktionssystem, zum Polymerisieren des polymerisierbaren Phosphates oder zum Copolymerisieren des polymerisierbaren Phosphates mit einem Monomer, das mit dem polymerisierbaren Phosphat copolymerisierbar ist, und um hierdurch ein Phosphatpolymer zu erzeugen, worin die (Co)polymerisation in der Gegenwart eines Kettenübertragungsmittels und durch Lösungspolymerisation in einem Lösungsmittel vom wässrigen Typ durchgeführt wird.

2. Produktionsverfahren nach Anspruch 1, worin die Polymerisation des polymerisierbaren Phosphates oder die Polymerisation des polymerisierbaren Phosphates und des mit dem polymerisierbaren Phosphat copolymerisierbaren Monomers bei einem pH von 7 oder weniger im Schritt (II) durchgeführt wird.

3. Produktionsverfahren nach Anspruch 1 oder 2, worin die Zeit von Beginn bis zum Ende der Addition des Phosphatierungsmittels (2) zum Reaktionssystem im Schritt (I) innerhalb von 20 h ist.

4. Produktionsverfahren nach einem der Ansprüche 1 bis 3, worin die organische Hydroxyverbindung (1), die im Schritt (I) verwendet wird, ein Alkylenoxidaddukt an eine Methacrylsäure oder Acrylsäure (das Alkylenoxid hat 2 bis 12

Kohlenstoffatome und die durchschnittliche Zugabemolzahl von Alkylenoxid ist 0,1 bis 20) ist.

**5.** Produktionsverfahren nach einem der Ansprüche 1 bis 4, worin das Phosphatierungsmittel (2), das im Schritt (I) verwendet wird, zumindest eines ist, ausgewählt aus der Gruppe bestehend aus Phosphorpentoxid, Phosphorsäure und Polyphosphorsäure.

**6.** Produktionsverfahren nach Anspruch 5, worin das Phosphatierungsmittel eine Kombination von Orthophosphorsäure und Phosphorpentoxid ist.

**7.** Produktionsverfahren nach einem der Ansprüche 1 bis 6, worin der Polymerisationsinhibitor, der im Schritt (I) und/ oder im Schritt (II) verwendet wird, zumindest einer ist, ausgewählt aus der Gruppe bestehend aus einer Verbindung vom aromatischen Chinontyp und einer Verbindung vom Nitrosamintyp.

**8.** Produktionsverfahren nach einem der Ansprüche 1 bis 7, worin das polymerisierbare Phosphat, das im Schritt (II) verwendet wird, zumindest eines ist, ausgewählt aus der Gruppe bestehend aus 2-Methacryloyloxyethylphosphat und 2-Acryloyloxyethylphosphat.

**9.** Produktionsverfahren nach einem der Ansprüche 1 bis 8, worin die polymerisierbare Phosphatzusammensetzung, die im Schritt (II) verwendet wird, den Polymerisationsinhibitor in einer Menge von 0,1-10 Gew.-% enthält.

**10.** Produktionsverfahren nach Anspruch 9, umfassend einen Zugabeschritt zum Auffüllen des verbrauchten Polymerisationsinhibitors vor dem Schritt (II).

**11.** Produktionsverfahren nach einem der Ansprüche 1 bis 10, worin das Monomer, das mit dem polymerisierbaren Phosphat polymerisierbar ist, das im Schritt (II) verwendet wird, ein Monomer mit der folgenden Formel (A) ist:

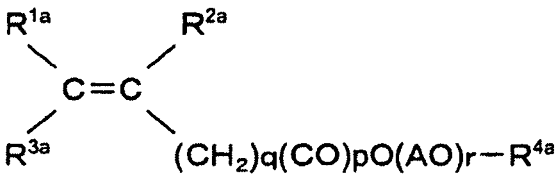

(A)

worin $R^{1a}$ und $R^{2a}$ jeweils ein Wasserstoffatom oder eine Kohlenwasserstoffgruppe mit 1 bis 5 Kohlenstoffatomen bedeuten und $R^{3a}$ ein Wasserstoffatom oder $-(CH_2)_q(CO)_pO(AO)_rR^{4a}$ ist, worin AO eine Oxyalkylengruppe mit 2 bis 4 Kohlenstoffatomen oder eine Oxystyrolgruppe ist, p eine Zahl von 0 oder 1 ist, q eine Zahl von 0 bis 2 ist, r die durchschnittliche zugegebene Molzahl von AO ist und eine Zahl von 3 bis 300 ist und $R^{4a}$ ein Wasserstoffatom oder eine Alkylgruppe mit 1 bis 18 Kohlenstoffatomen ist.

**12.** Phosphatpolymerzusammensetzung, umfassend das Phosphatpolymer, erhalten im Produktionsverfahren nach einem der Ansprüche 1 bis 11.

**13.** Pulverdispergiermittel, umfassend die Phosphatpolymerzusammensetzung nach Anspruch 12.

**14.** Material für ein Dispergiermittel von Beton, umfassend die Phosphatpolymerzusammensetzung nach Anspruch 12.

**15.** Verfahren zur Erzeugung eines Betondispersionsmittels, umfassend die Zugabe der Phosphatpolymerzusammensetzung wie in Anspruch 12 definiert, zu einer hydraulischen Zusammensetzung.

## Revendications

**1.** Procédé de production d'un polymère de phosphate, comprenant les étapes (I) et (II) suivantes :

étape (I) : une étape comprenant l'ajout d'un agent de phosphatation (2) et d'un inhibiteur de polymérisation à un système réactionnel comprenant un composé hydroxy organique (1) représenté par la formule (1) suivante pour faire réagir le composé hydroxy organique (1) avec l'agent de phosphatation (2) et produire un phosphate

polymérisable, dans lequel le composé hydroxy organique (1) et l'agent de phosphatation (2) sont utilisés dans une condition telle que la valeur de l'équation (I) suivante est de 2,0 à 4,0 et le système réactionnel est maintenu à une température de 40°C à 75°C du début de l'ajout de l'agent de phosphatation (2) jusqu'à la fin de l'ajout de l'agent de phosphatation (2) :

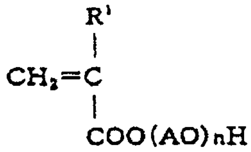

(1)

dans laquelle $R^1$ représente un atome d'hydrogène ou un groupe hydrocarboné ayant de 1 à 10 atomes de carbone, A représente un groupe alkylène ayant de 2 à 12 atomes de carbone et n représente un nombre de 0,1 à 20 en moyenne ;

$$\frac{\begin{pmatrix}\text{nombre de moles d'eau contenant } n(H_2O),\\ \text{incluse dans l'agent de phosphatation}\\ \text{représenté par } P_2O_5n(H_2O)\end{pmatrix}+\begin{pmatrix}\text{nombre de moles}\\ \text{d'un composé}\\ \text{hydroxy organique}\end{pmatrix}}{(\text{nombre de moles de l'agent de phosphatation sur la base du } P_2O_5)} \quad (I)$$

étape (II) : chauffage de la composition de phosphate polymérisable qui est obtenue dans l'étape (I) et qui contient le phosphate polymérisable et l'inhibiteur de polymérisation à 40°C à 100°C et ajout de la composition chauffée à un système réactionnel pour polymériser le phosphate polymérisable ou copolymériser le phosphate polymérisable avec un monomère copolymérisable avec le phosphate polymérisable et ainsi produire un polymère de phosphate, dans lequel la (co)polymérisation est réalisée en présence d'un agent de transfert de chaîne et par polymérisation en solution d'un solvant de type aqueux.

2. Procédé de production selon la revendication 1, dans lequel la polymérisation du phosphate polymérisable ou la polymérisation du phosphate polymérisable et du monomère copolymérisable avec le phosphate polymérisable est réalisée à un pH de 7 ou moins dans l'étape (II).

3. Procédé de production selon la revendication 1 ou 2, dans lequel le temps nécessaire du début à la fin de l'ajout de l'agent de phosphatation (2) au système de réaction dans l'étape (I) est de 20 heures.

4. Procédé de production selon l'une quelconque des revendications 1 à 3, dans lequel le composé hydroxy organique (1) utilisé dans l'étape (I) est un produit d'addition d'un oxyde d'alkylène avec un acide méthacrylique ou un acide acrylique (l'oxyde d'alkylène a de 2 à 12 atomes de carbone et le nombre moyen de moles d'oxyde d'alkylène ajoutées est de 0,1 à 20).

5. Procédé de production selon l'une quelconque des revendications 1 à 4, dans lequel l'agent de phosphatation (2) utilisé dans l'étape (I) est au moins un sélectionné dans le groupe consistant en le pentoxyde de phosphore, l'acide phosphorique et l'acide polyphosphorique.

6. Procédé de production selon la revendication 5, dans lequel l'agent de phosphatation est une combinaison d'acide orthophosphorique et de pentoxyde de phosphore.

7. Procédé de production selon l'une quelconque des revendications 1 à 6, dans lequel l'inhibiteur de polymérisation utilisé dans l'étape (I) et/ou dans l'étape (II) est au moins un sélectionné dans le groupe consistant en un composé de type quinone aromatique et un composé de type nitrosamine.

8. Procédé de production selon l'une quelconque des revendications 1 à 7, dans lequel le phosphate polymérisable utilisé dans l'étape (II) est au moins un sélectionné dans le groupe consistant en le phosphate de 2-méthacryloyloxyéthyle et le phosphate de 2-acryloyloxyéthyle.

9. Procédé de production selon l'une quelconque des revendications 1 à 8, dans lequel la composition de phosphate polymérisable utilisée dans l'étape (II) comprend l'inhibiteur de polymérisation en une quantité de 0,1 à 10 % en poids.

10. Procédé de production selon la revendication 9, comprenant une étape d'ajout pour compenser l'inhibiteur de polymérisation consommé avant l'étape (II).

11. Procédé de production selon l'une quelconque des revendications 1 à 10, dans lequel le monomère polymérisable avec le phosphate polymérisable utilisé dans l'étape (II) est un monomère représenté par la formule (A) suivante :

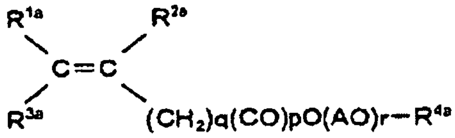

(A)

dans laquelle, $R^{1a}$ et $R^{2a}$ représentent respectivement un atome d'hydrogène ou un groupe hydrocarboné ayant de 1 à 5 atomes de carbone, et $R^{3a}$ représente un atome d'hydrogène ou $-(CH_2)_q(CO)_pO(AO)_rR^{4a}$, dans lequel AO représente un groupe oxyalkylène ayant de 2 à 4 atomes de carbone ou un groupe oxystyrène, p indique un nombre de 0 ou 1, q indique un nombre de 0 à 2, r indique le nombre moyen de moles d'AO ajouté et indique un nombre de 3 à 300 et $R^{4a}$ représente un atome d'hydrogène ou un groupe alkyle ayant de 1 à 18 atomes de carbone.

12. Composition de polymère de phosphate comprenant le polymère de phosphate obtenu dans le procédé de production selon l'une quelconque des revendications 1 à 11.

13. Dispersant en poudre comprenant la composition de polymère de phosphate selon la revendication 12.

14. Matériau pour un dispersant de ciment, comprenant la composition de polymère de phosphate selon la revendication 12.

15. Procédé de production d'un dispersant de ciment comprenant l'ajout de la composition de polymère de phosphate selon la revendication 12 à une composition hydraulique.

Fig. 1

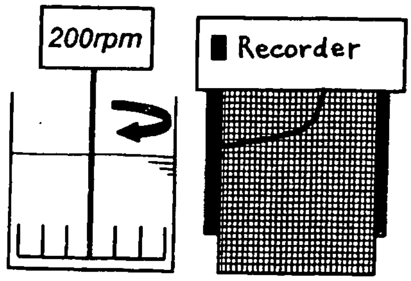
200rpm
Recorder

Fig. 2

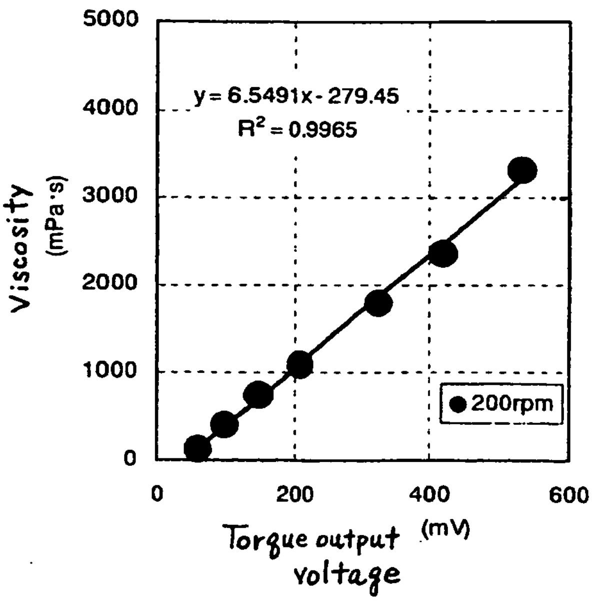
y = 6.5491x - 279.45
$R^2$ = 0.9965
Viscosity (mPa·s)
5000
4000
3000
2000
1000
0
0
200
400
600
Torque output voltage (mV)
200rpm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11080175 A
- JP 2006052381 A
- JP 2003146992 A